# EUROPÄISCHE PATENTSCHRIFT

(11) **EP 2 348 288 B1**
(45) Veröffentlichungstag und Bekanntmachung des Hinweises auf die Patenterteilung: **28.12.2016**
(21) Anmeldenummer: 10174572.7
(22) Anmeldetag: 31.08.2010
(51) Int. Cl.: G01D 5/347

(54) **Anordnung mit einem an einem Träger befestigten Maßstab**
Assembly with a measuring rod attached to a holder
Agencement doté d'un mètre fixé sur un support

(30) Priorität: 25.11.2009 DE 102009047120
(43) Veröffentlichungstag der Anmeldung: 27.07.2011
(73) Patentinhaber: Dr. Johannes Heidenhain GmbH, 83301 Traunreut (DE)
(72) Erfinder: Weidmann, Josef, 83352 Altenmarkt (DE); Speckbacher, Peter, 84558 Kirchweidach (DE)

(56) Entgegenhaltungen:
- EP-A1- 1 783 463
- EP-B1- 0 264 801
- DE-A1- 4 129 305
- JP-A- H06 324 221
- US-A1- 2009 109 445

## Beschreibung

Zur Messung der Relativlage zweier Maschinenteile ist an einem der Maschinenteile ein Maßstab zu befestigen und am anderen der zueinander beweglichen Maschinenteile eine Abtasteinheit. Bei der Positionsmessung wird eine Messteilung des Maßstabs von der Abtasteinheit abgetastet und positionsabhängige Abtastsignale generiert.

In der EP 0 264 801 B1 ist ein Maßstab an einem Träger montiert, indem er sich auf Kugeln abstützt. Die Kugeln sind in kleinen Bereichen rollbeweglich gelagert sind. Die Haltekraft zwischen dem Maßstab und dem Träger wird durch Federn eingeleitet.

Durch die Kombination Kugel und Feder ist eine Befestigung und Unterstützung nur im Randbereich des Maßstabs möglich, wodurch keine ebene Lagerung innerhalb des tatsächlichen Messbereichs des Maßstabs erreicht wird.

In der EP 1 783 463 A1 ist eine Maßstabbefestigung mittels Ansprengen erläutert. Die Kontaktfläche gemäß der EP 1 783 463 A1 ist in viele kleine voneinander beabstandete Kontaktflächen unterteilt. Die Unterstützungen sind einstückig am Maßstab oder am Träger ausgebildet. Durch diese Ausbildung wird zwar eine sichere Befestigung und relativ gleichmäßige Unterstützung eines Maßstabs auch im Messbereich gewährleistet, eine stressfreie und über die gesamte Messteilungsebene homogene Andruckkraft ist aber damit nur schwer erreichbar.

Aufgabe der Erfindung ist es, eine Anordnung mit einem an einem Träger befestigten Maßstab anzugeben, wobei der Maßstab am Träger stabil und driftfrei gehalten wird. Weiterhin soll die Befestigung möglichst einfach und mit kostengünstigen Mitteln ermöglicht werden.

Gelöst wird diese Aufgabe durch die im Anspruch 1 angegebene Anordnung.

Demnach weist der Maßstab eine Messteilung auf und stützt sich über zweidimensional verteilt angeordnete Kugeln am Träger ab. Die Messteilung definiert auf einer Oberfläche des Maßstabs einen Messbereich und die der Messteilung gegenüberliegende Oberfläche des Maßstabs bildet eine Auflagefläche, welche die Kugeln kontaktiert. Die Haltekraft zwischen dem Träger und dem Maßstab wird aufgebracht, indem die Kugeln einerseits am Träger und andererseits am Maßstab unverrückbar befestigt sind. Diese ortsfesten Befestigungen sind jeweils durch Stoffschluss realisiert.

Für diese unverrückbare ortsfeste Befestigung der Kugeln dient ein Haltemittel, insbesondere ein Haftmittel, welches eine stoffschlüssige Befestigung der Kugeln bewirkt. Dieses Haltemittel ist vorzugsweise als Beschichtung ausgeführt, wobei es hierzu mehrere Möglichkeiten gibt. Die Schicht, in welcher die Kugeln ortsfest am Träger befestigt sind, kann auf dem Träger aufgebracht sein und / oder die Schicht ist in Form einer Umhüllung auf den Kugeln aufgebracht. Die Schicht, in welcher die Kugeln ortsfest am Maßstab befestigt sind, kann auf dem Maßstab aufgebracht sein und / oder die Schicht ist in Form einer Umhüllung auf den Kugeln aufgebracht. Im montierten Zustand sind diese Schichten von den Kugeln durchdrungen, so dass ein direkter Kontakt der Kugeln mit der Auflagefläche des Maßstabs und dem Träger vorhanden ist, ohne Zwischenschaltung von Schichtmaterial.

Besonders vorteilhaft ist die Verwendung eines Haftmittels, insbesondere Klebstoff, das bei der Aushärtung schrumpft und dieser Schrumpfungseffekt positiv genutzt wird, indem dadurch eine Haltekraft generiert wird, die als Zugfeder wirkt, wodurch die Auflagefläche des Maßstabs an die Kugeln gezogen wird.

Besonders vorteilhaft ist, wenn die Kugeln in einem gegenseitigen Mittenabstand angeordnet sind, der kleiner als die Dicke des Maßstabs ist.

Die Kugeln und die Mittel zur Befestigung, also die Haltemittel, sind derart angeordnet und ausgebildet, dass sich dazwischen Freiräume ausbilden, welche nach außen führende Kanäle bilden. Diese im Zwischenraum von Maßstab und Träger verlaufenden Kanäle korrespondieren mit dem Umgebungsmedium.

Um Verspannungen zu vermeiden, ist es besonders vorteilhaft, wenn die Materialien von Träger und von Maßstab jeweils den gleichen thermischen Ausdehnungskoeffizienten aufweisen. Der Ausdehnungskoeffizient des Trägers und des Maßstabs ist vorzugsweise kleiner als 0,1 x 10⁻⁶K⁻¹.

Die Kugeln bestehen aus einem Material, das auftretenden Druckkräften möglichst ohne Verformung standhält. Ein geeignetes Material ist beispielsweise Glas.

Weitere vorteilhafte Ausbildungen der Erfindung sind in den abhängigen Ansprüchen angegeben.

Die flächige Ebenheit - auch eines großflächigen Maßstabs - bleibt bei der erfindungsgemäßen Anordnung erhalten bzw. wird nicht gestört, da störende Medien sich in den durch die zwischen den Kugeln gebildeten Freiräumen ablagern können. Durch die erfindungsgemäße Maßnahme werden kurzperiodische Längenfehler in der Messteilungsebene vermieden und eine hohe Messgenauigkeit ist sichergestellt.

Der Maßstab ist im Messbetrieb stabil am Träger befestigt, was eine hohe Steifigkeit in Messrichtung sowie senkrecht zur Messteilungsebene bedeutet.

Ausführungsbeispiele der Erfindung werden anhand der Zeichnungen näher erläutert.

Es zeigen:
- Figur 1: einen Träger mit Kugeln beim Aufsetzen eines Maßstabs nach einem ersten Ausführungsbeispiel im Querschnitt;
- Figur 2: den am Träger gehaltenen Maßstab nach dem ersten Ausführungsbeispiel im Querschnitt;
- Figur 3: eine Draufsicht auf die Anordnung gemäß Figur 2;
- Figur 4: einen Träger mit Kugeln beim Aufsetzen eines Maßstabs nach einem zweiten Ausführungsbeispiel im Querschnitt;
- Figur 5: den am Träger gehaltenen Maßstab nach dem zweiten Ausführungsbeispiel im Querschnitt;
- Figur 6: einen Träger mit Kugeln beim Aufsetzen eines Maßstabs nach einem dritten Ausführungsbeispiel im Querschnitt, und
- Figur 7: den am Träger gehaltenen Maßstab nach dem dritten Ausführungsbeispiel im Querschnitt.

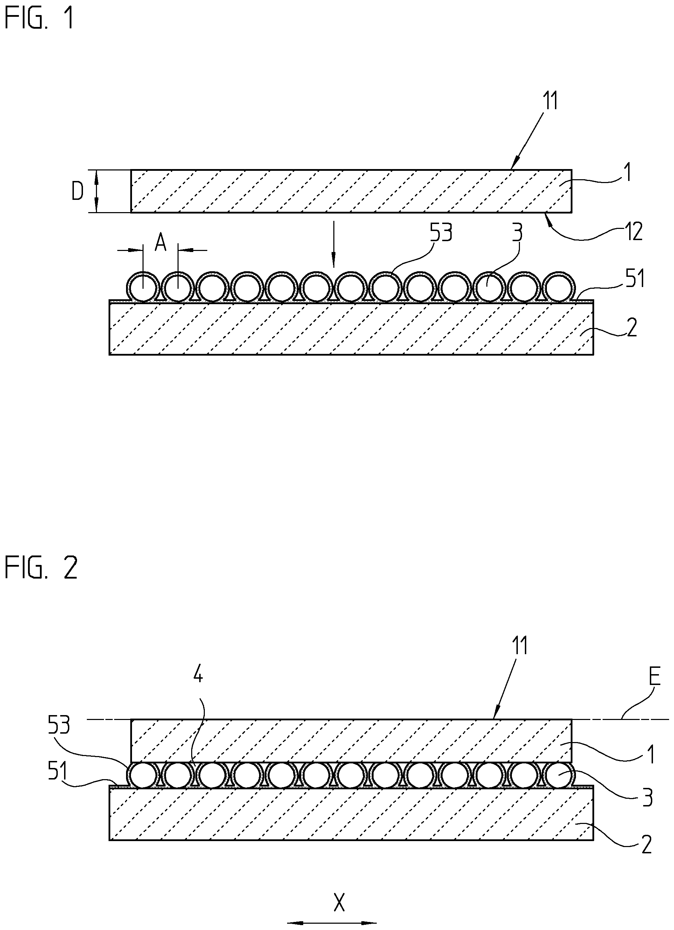

Anhand der Figuren 1 bis 3 wird ein erstes Ausführungsbeispiel der Erfindung erläutert. Dabei ist ein Maßstab 1 aus Glas oder Glaskeramik (z. B. ZERODUR) mit einer Messteilung 11 dargestellt. Die Messteilung 11 ist eine inkrementale Teilung, die bei der Positionsmessung in zwei Messrichtungen X und Y von einer nicht dargestellten Abtasteinheit zur Erzeugung von positionsabhängigen Abtastsignalen lichtelektrisch abgetastet wird. Die Messteilung 11 kann ein reflektierendes Amplitudengitter oder ein Phasengitter sein, das in bekannter Weise zur hochgenauen interferentiellen Positionsmessung dient. Der Maßstab 1 ist während dieser Positionsmessung an einem Träger 2 gehalten. Dieser Träger 2 besteht vorzugsweise aus einem Material, das den gleichen Ausdehnungskoeffizienten aufweist, wie der Maßstab 1. Der mittlere thermische Ausdehnungskoeffizient α im Temperaturbereich von 0° bis 50° von Maßstab 1 und Träger 2 ist vorzugsweise kleiner als 0,1 x 10⁻⁶K⁻¹ bei Verwendung von Gläsern mit sogenannter Nullausdehnung, wie ZERODUR, SITAL und ULE, und kleiner als 1,5 x 10⁻⁶K⁻¹ bei Verwendung von Metallen, wie beispielsweise INVAR.

Auf der dem Träger 2 zugewandten Oberfläche 12 des Maßstabs 1 wird dieser durch Kugeln 3 unterstützt. Diese Kugeln 3 sind zweidimensional räumlich verteilt angeordnet, entweder geometrisch gleichmäßig in einem regelmäßigen Raster verteilt oder statistisch verteilt. Die Kugeln 3 sind mit einem gegenseitigen Mittenabstand A von kleiner der Dicke D des Maßstabs 1 angeordnet. Insbesondere sind die Kugeln 3 in einem gegenseitigen Mittenabstand A kleiner 1/10 der Dicke D des Maßstabs 1 angeordnet. Diese Bedingung ist an jeder Stelle der zweidimensionalen Verteilung der Kugeln 3, zumindest aber innerhalb des Messbereichs M, erfüllt. Der Messbereich M ist definiert durch den Bereich der Messteilung 11, der für die hochgenaue Positionsmessung genutzt wird. Die Dicke D des Maßstabs 1 ist der Abstand zwischen der Messteilungsebene E, in der die Messteilung 11 liegt, und der Auflagefläche 12, mit der er sich auf den Kugeln 3 abstützt.

Durch diese Maßnahme ist gewährleistet, dass alle Zug- und Druckspannungen, die durch die Befestigung eingebracht werden, derart räumlich hochfrequent sind, dass sich diese über die Dicke D des Maßstabs 1 abbauen und sich in der Messteilungsebene E nicht als Längenfehler auswirken. Durch die der Messteilung 11 direkt gegenüberliegende Unterstützung ist der Maßstab 1 im Messbetrieb stabil am Träger 2 befestigt, was eine hohe Steifigkeit in den Messrichtungen X und Y sowie senkrecht zur Messteilungsebene E bedeutet.

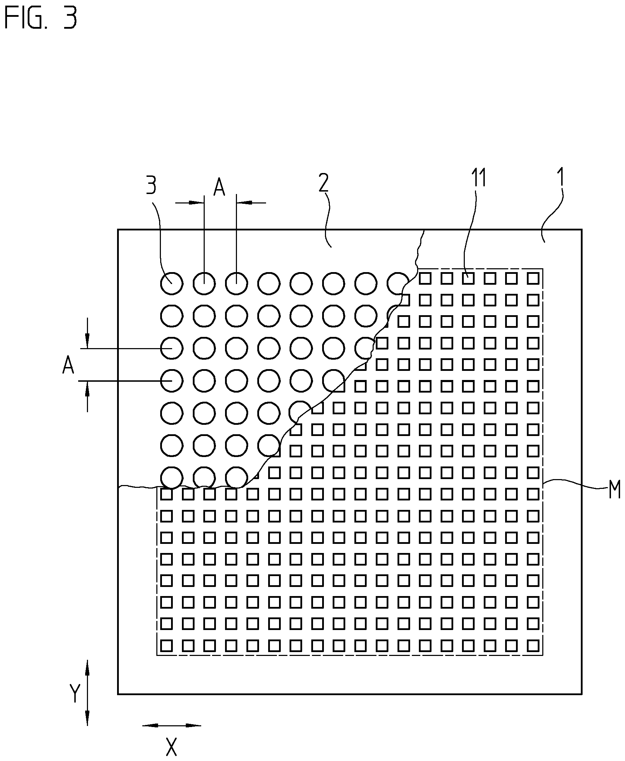

In Figur 3 ist die zweidimensionale Messteilung 11 des Maßstab 1 in Draufsicht dargestellt. Um die zweidimensional verteilte Anordnung der Kugeln 3 zwischen dem Maßstab 1 und dem Träger 2 besser darstellen zu können, ist im oberen linken Teil der Ansicht der Maßstab 1 weggelassen.

Die in Figur 3 als Draufsicht gezeigte zweidimensionale räumliche Verteilung der Kugeln 3 erfolgt derart, dass zwischen den Kugeln 3 Freiräume 4 entstehen, die miteinander in Verbindung stehen und somit nach außen führende Kanäle bilden. Durch diese Maßnahme kann die Luft über die gesamte Fläche des Maßstabs 1 über die Kanäle homogen nach außen in die Umgebung abgegeben werden, was eine gute Ebenheit des Maßstabs 1 sicherstellt.

Typische Werte für die Dicke D des Maßstabs 1 liegen bei 0,5mm bis 15mm.

Die Kugeln 3 bestehen aus einem Material, das auftretenden Druckkräften möglichst ohne Verformung standhält. Ein geeignetes Material ist beispielsweise Glas. In vorteilhafter Weise bestehen die Kugeln 3 aus einem Material, das den gleichen Ausdehnungskoeffizienten aufweist, wie der Maßstab 1.

Die Kugeln 3 haben insbesondere einen Durchmesser zwischen 20 µm und 200 µm, typisch 50 µm. Die Toleranz der Kugeln bezüglich Durchmesser und Rundheit ist vorzugsweise kleiner 5 µm, d. h., bei einem Solldurchmesser von 50 µm haben die Kugeln 3 eine Abweichung von maximal ± 5 µm.

Die eigentliche Befestigung des Maßstabs 1 am Träger 2 erfolgt bei allen Ausführungsbeispielen durch unverrückbare Befestigung der Kugeln 3 einerseits an dem Träger 2 und andererseits an dem Maßstab 1. Diese Befestigungen sind stoffschlüssige Verbindungen, also beispielsweise Kleben, Löten oder Schweißen.

Beim ersten Ausführungsbeispiel dient zur driftfreien Halterung der Kugeln 3 am Maßstab 1 und am Träger 2 ein Haltemittel in Form einer auf den Träger 2 aufgebrachten Schicht 51, in welcher die Kugeln 3 eingebettet sind und dadurch örtlich stabil am Träger 2 gebunden sind. Diese Schicht 51 ist ein Haftmittel, beispielsweise ein fest aushärtender Klebstoff, ein Fotolack oder ein Polymer und hat eine Dicke, die ein Bruchteil des Durchmessers der Kugeln 3 ist.

Die Lagefixierung des Maßstabs 1 gegenüber der nun am Träger 2 lagefixierten Kugeln 3 erfolgt ebenfalls mit einem Haltemittel 53 in Form eines Haftmittels, beispielsweise in Form eines Klebstoffs oder eines anderen fest aushärtenden Materials, welches die Kugeln 3 umhüllt und haftend wirkt.

Die Kugeln 3 kontaktieren einerseits den Maßstab 1 auf seiner Unterseite, also der Auflagefläche 12 jeweils punktförmig und andererseits den Träger 2 ebenfalls punktförmig. Dadurch ist gewährleistet, dass die Ebenheit des Maßstabs 1 nicht durch andere Medien, beispielsweise dem Klebstoff, nachteilig beeinflusst wird. Die Haltemittel 51, 53 haben nur den Zweck, die Kugeln 3 ortsfest zu fixieren und die Haltekraft zwischen dem Träger 2 und dem Maßstab 1 zu generieren und aufrechtzuerhalten.

Durch die Kugelform und die geeignete Wahl der Dicke der Schichten 51 und 53 ist gewährleistet, dass zwischen jeweils zwei Kugeln 3, auch wenn diese aneinander anstoßen, Freiräume 4 entstehen. Das Haltemittel 51, 53, also das Schichtmaterial, hat für die Aushärtung und auch die spätere Alterung ausreichend Volumen, ohne den Abstand zwischen dem Träger 2 und dem Maßstab 1 zu beeinflussen.

Bei der zweidimensionalen Anordnung der Kugeln 3 stehen diese Freiräume 4 miteinander in Verbindung und bilden somit nach außen führende Kanäle. Durch diese Maßnahme kann die Luft über die gesamte Fläche des Maßstabs 1 über die Kanäle homogen nach außen in die Umgebung abgegeben werden, was eine gute Ebenheit des Maßstabs 1 bei der Montage und auch während des Messbetriebs sicherstellt.

Diese miteinander in Verbindung stehenden Freiräume 4 haben den Vorteil, dass bei dem Auflegen des Maßstabs 1 auf die Kugeln 3 Luft im Zwischenraum zwangskräftefrei entweichen kann. Weiterhin besteht die Möglichkeit, die Freiräume 4 als Kanäle zum Vakuum-Ansaugen des Maßstabs 1 zu nutzen. Dabei wird der Maßstab 1 auf die Kugeln 3 aufgelegt und eine Haltekraft durch Bilden von Unterdruck in den Freiräumen 3 eingeleitet, bis das Schichtmaterial vollständig ausgehärtet ist. Die nach außen führenden Freiräume 4 können auch genutzt werden, um den Zwischenraum zwischen den Kugeln 3 mit einem Medium zu spülen, um beispielsweise das Schichtmaterial gezielt zu beeinflussen oder zur Temperaturregelung. Anstelle von Unterdruck kann auch Überdruck angelegt werden oder ein das Schichtmaterial lösendes Medium eingebracht werden, um eine Demontage des Maßstabs 1 zu ermöglichen.

Obige Ausführungen zu dem Träger 2, dem Maßstab 1 und der Messteilung 11 gelten auch bei den nachfolgenden Ausführungsbeispielen. Für diese Elemente werden deshalb bei allen Ausführungsbeispielen die gleichen Bezugszeichen verwendet.

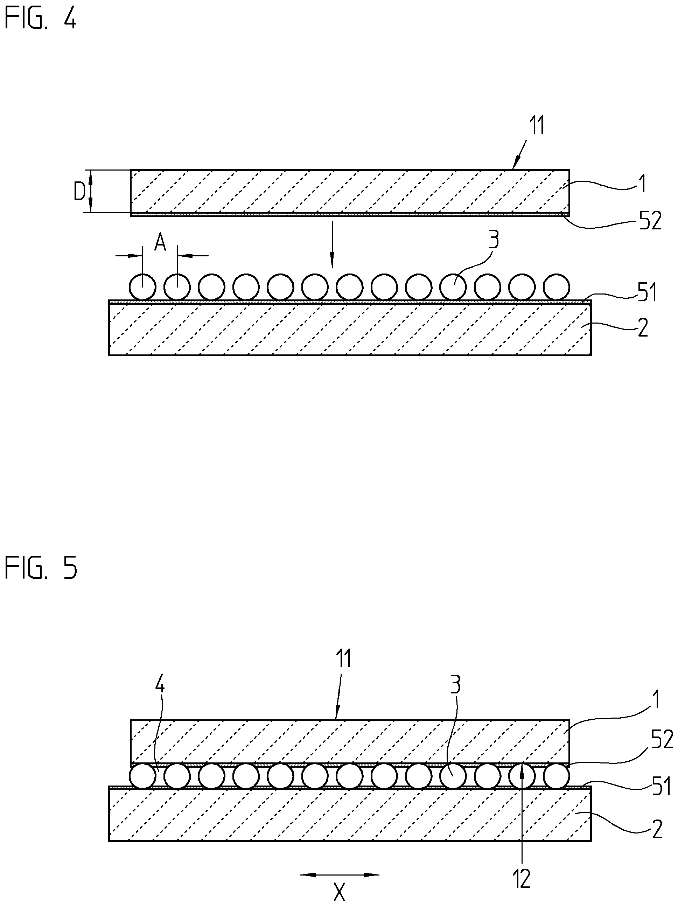

Das in den Figuren 4 und 5 dargestellte zweite Ausführungsbeispiel unterscheidet sich gegenüber dem ersten Ausführungsbeispiel nur dadurch, dass zur ortsfesten Lagefixierung der Kugeln 3 am Maßstab 1 ein Haltemittel in Form einer Schicht 52 an der Auflagefläche 12 des Maßstabs 1 aufgebracht ist.

Auch hier kontaktieren die Kugeln 3 einerseits den Maßstab 1 auf seiner Auflagefläche 12 jeweils punktförmig, durchstoßen bei dem Auflegen des Maßstabs 1 also die Schicht 52. Andererseits kontaktieren die Kugeln 3 den Träger 2 ebenfalls punktförmig. Dadurch ist gewährleistet, dass die Ebenheit des Maßstabs 1 nicht durch andere Medien, insbesondere dem Schichtmaterial, nachteilig beeinflusst wird. Die Haltemittel 51, 52 haben nur den Zweck, die Kugeln 3 ortsfest zu fixieren und die Haltekraft zwischen dem Träger 2 und dem Maßstab 1 zu generieren und aufrechtzuerhalten.

Durch die Kugelform und die geeignete Wahl der Dicke der Schichten 51 und 52 ist gewährleistet, dass zwischen jeweils zwei Kugeln 3, auch wenn diese aneinander anstoßen, Freiräume 4 entstehen. Das Haltemittel 51, 52, also das Schichtmaterial hat für die Aushärtung und auch die spätere Alterung ausreichend Volumen, ohne den Abstand zwischen dem Träger 2 und dem Maßstab 1 zu beeinflussen.

Bei der zweidimensionalen Anordnung der Kugeln 3 stehen diese Freiräume 4 miteinander in Verbindung und bilden somit nach außen führende Kanäle. Durch diese Maßnahme kann die Luft über die gesamte Fläche des Maßstabs 1 über die Kanäle homogen nach außen in die Umgebung abgegeben werden, was eine gute Ebenheit des Maßstabs 1 bei der Montage und auch während des Messbetriebs sicherstellt.

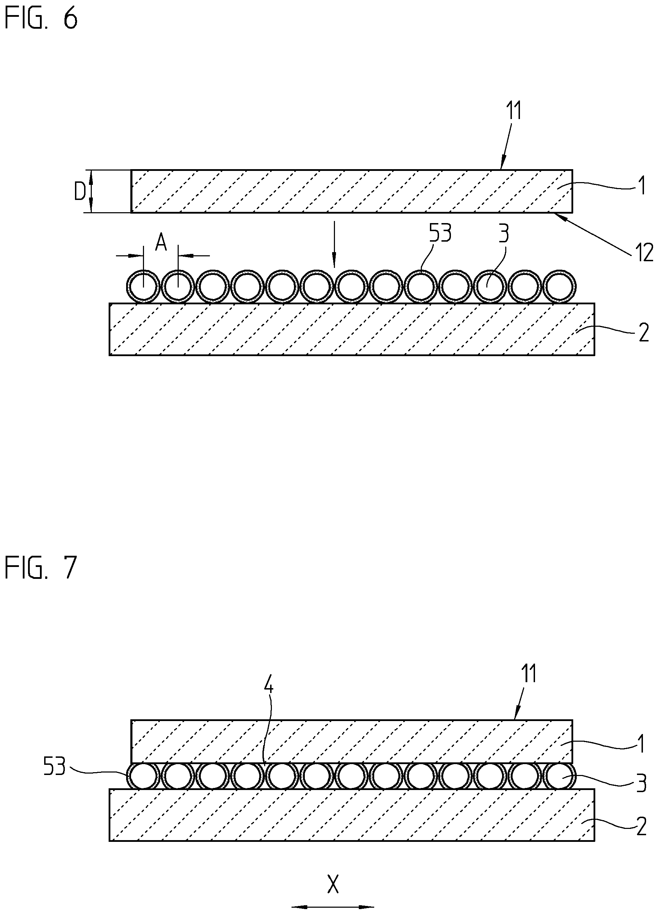

Der Unterschied des in den Figuren 6 und 7 dargestellten dritten Ausführungsbeispiels gegenüber dem ersten Ausführungsbeispiel besteht darin, dass als Haltemittel nur die als Umhüllung der Kugeln 3 fungierende Schicht 53 zur ortsfesten Fixierung der Kugeln 3 am Träger 2 sowie zur ortsfesten Fixierung der Kugeln am Maßstab 1 fungiert. Diese Umhüllung kann realisiert werden, indem die Kugeln 3 in einem Haltemittel, beispielsweise Klebstoff oder Fotoresist vermischt werden, so dass sich die Kugeln 3 darin verteilen und diese Mischung auf den Träger 2 aufgetragen wird.

Zur besseren Handhabung und Verteilung der Kugeln 3 auf dem Träger 2 können diese auch in einem Träger, beispielsweise in einer Folie, fixiert sein, wobei diese so vorgefertigte Folie dann auf dem Träger 2 und / oder dem Maßstab 1 aufgelegt wird.

Bei allen Ausführungsbeispielen kann die ortsfeste Halterung zwischen den Kugeln 3 und dem Träger 2 sowie den Kugeln 3 und dem Maßstab 1 durch Haftmittel in Form von Klebstoffen, von Fotolack, von Lotmaterial (z. B. Glaslot), von Sinterschichten oder durch Cold-Bonding realisiert werden.

Anstelle oder zusätzlich zu der inkrementalen Messteilung 11 kann auch eine absolute Codierung vorgesehen werden.

## Patentansprüche

1. Anordnung mit einem an einem Träger (2) befestigten Maßstab (1), wobei der Maßstab (1) eine Messteilung (11) aufweist und über zweidimensional verteilt angeordnete Kugeln (3) am Träger (2) abgestützt ist, die der einen Messbereich (M) definierenden Messteilung (11) des Maßstabs (1) gegenüberliegend angeordnet sind, wobei die Kugeln (3) einerseits am Träger (2) und andererseits am Maßstab (1) unverrückbar befestigt sind.

2. Anordnung nach Anspruch 1, **dadurch gekennzeichnet, dass** die Kugeln (3) über Haltemittel (51, 52, 53) in ihrer Position an dem Träger (2) und an dem Maßstab (1) unverrückbar gehalten sind, wobei das Haltemittel (51, 52, 53) einen Stoffschluss zwischen den Kugeln (3) und dem Träger (2) sowie zwischen den Kugeln (3) und dem Maßstab (1) bewirkt.

3. Anordnung nach Anspruch 2, **dadurch gekennzeichnet, dass** das Haltemittel eine erste auf dem Träger (2) angeordnete Schicht (51) und eine zweite auf dem Maßstab (1) angeordnete Schicht (52) ist, in welche die Kugeln (3) eingebettet sind.

4. Anordnung nach einem der Ansprüche 2 oder 3, **dadurch gekennzeichnet, dass** das Haltemittel eine die Kugeln (3) umhüllende Schicht (53) ist.

5. Anordnung nach einem der vorhergehenden Ansprüche, **dadurch gekennzeichnet, dass** die Kugeln (3) in einem gegenseitigen Mittenabstand (A) angeordnet sind, der kleiner ist als die Dicke (D) des Maßstabs (1) ist.

6. Anordnung nach einem der vorhergehenden Ansprüche, **dadurch gekennzeichnet, dass** die Kugeln (3) derart angeordnet und befestigt sind, dass diese gegenseitige Freiräume (4) aufweisen, welche nach außen führende Kanäle bilden.

7. Anordnung nach einem der vorhergehenden Ansprüche, **dadurch gekennzeichnet, dass** die Materialien von Träger (2) und von Maßstab (1) den gleichen thermischen Ausdehnungskoeffizienten aufweisen.

8. Anordnung nach Anspruch 7, **dadurch gekennzeichnet, dass** der Ausdehnungskoeffizient des Trägers (2) und des Maßstabs (1) kleiner als 1,5 x 10⁻⁶K⁻¹ ist, vorzugsweise kleiner als 0,1 x 10⁻⁶K⁻¹ ist.

## Claims

1. Arrangement having a scale (1) fastened to a carrier (2), wherein the scale (1) has a measurement graduation (11) and is supported on balls (3), arranged in a two-dimensionally distributed manner, on the carrier (2), said balls (3) being arranged on the opposite side from the measurement graduation (11), defining a measuring region (M), of the scale (1), wherein the balls (3) are fastened immovably to the carrier (2) on the one hand and to the scale (1) on the other hand.

2. Arrangement according to Claim 1, **characterized in that** the balls (3) are held immovably in their position on the carrier (2) and on the scale (1) via holding means (51, 52, 53), wherein the holding means (51, 52, 53) brings about a material bond between the balls (3) and the carrier (2) and between the balls (3) and the scale (1).

3. Arrangement according to Claim 2, **characterized in that** the holding means is a first layer (51) arranged on the carrier (2) and a second layer (52) arranged on the scale (1), the balls (3) being embedded in said layers.

4. Arrangement according to either of Claims 2 and 3, **characterized in that** the holding means is a layer (3) enveloping the balls (3).

5. Arrangement according to one of the preceding claims, **characterized in that** the balls (3) are arranged at a mutual centre-to-centre distance (A) which is less than the thickness (D) of the scale (1).

6. Arrangement according to one of the preceding claims, **characterized in that** the balls (3) are arranged and fastened such that they have mutual clearances (4) which form outwardly leading channels.

7. Arrangement according to one of the preceding claims, **characterized in that** the materials of the carrier (2) and of the scale (1) have the same coefficient of thermal expansion.

8. Arrangement according to Claim 7, **characterized in that** the coefficient of expansion of the carrier (2) and of the scale (1) is less than 1.5×10⁻⁶K⁻¹, preferably less than 0.1×10⁻⁶K⁻¹.

## Revendications

1. Agencement comprenant une échelle de mesure (1) fixée sur un support (2), l'échelle de mesure (1) présentant une graduation de mesure (11) et étant supportée sur le support (2) par le biais de billes (3) réparties de manière bidimensionnelle, qui sont disposées en regard de la graduation de mesure (11) de l'échelle de mesure (1) définissant une région de mesure (M), les billes (3) étant fixées de manière immuable d'une part sur le support (2) et d'autre part sur l'échelle de mesure (1).

2. Agencement selon la revendication 1, **caractérisé en ce que** les billes (3) sont retenues de manière immuable par le biais de moyens de retenue (51, 52, 53) dans leur position sur le support (2) et sur l'échelle de mesure (1), le moyen de retenue (51, 52, 53) provoquant un engagement par liaison de matière entre les billes (3) et le support (2) ainsi qu'entre les billes (3) et l'échelle de mesure (1).

3. Agencement selon la revendication 2, **caractérisé en ce que** le moyen de retenue est une première couche (51) disposée sur le support (2) et une deuxième couche (52) disposée sur l'échelle de mesure (1), dans lesquelles sont noyées les billes (3).

4. Agencement selon l'une quelconque des revendications 2 ou 3, **caractérisé en ce que** le moyen de retenue est une couche (53) enveloppant les billes (3).

5. Agencement selon l'une quelconque des revendications précédentes, **caractérisé en ce que** les billes (3) sont disposées à une distance moyenne mutuelle (A) inférieure à l'épaisseur (D) de l'échelle de mesure (1).

6. Agencement selon l'une quelconque des revendications précédentes, **caractérisé en ce que** les billes (3) sont disposées et fixées de telle sorte qu'elles présentent des espaces libres mutuels (4) qui forment des canaux conduisant vers l'extérieur.

7. Agencement selon l'une quelconque des revendications précédentes, **caractérisé en ce que** les matériaux du support (2) et de l'échelle de mesure (1) présentent les mêmes coefficients de dilatation thermique.

8. Agencement selon la revendication 7, **caractérisé en ce que** le coefficient de dilatation du support (2) et de l'échelle (1) est inférieur à 1,5 x 10⁻⁶K⁻¹, de préférence inférieur à 0,1 x 10⁻⁶K⁻¹.
